# EUROPEAN PATENT APPLICATION

(11) **EP 3 282 596 A1**
(43) Date of publication of application: **14.02.2018**
(21) Application number: 16776708.6
(22) Date of filing: 08.04.2016
(51) Int. Cl.: H04B 7/10, H04W 16/28

(54) **BEAM SELECTION METHOD, MOBILE STATION, AND BASE STATION**

(30) Priority: 09.04.2015 CN 201510166095
(71) Applicant: NTT DOCOMO, INC., Chiyoda-ku Tokyo 100-6150 (JP)
(72) Inventor: NAGATA, Satoshi, Tokyo 100-6150 (JP); KAKISHIMA, Yuichi, Palo Alto, California 94340 (US); NA, Chongning, Beijing 100190 (CN); HOU, Xiaolin, Beijing 100190 (CN); JIANG, Huiling, Beijing 100190 (CN)
(74) Representative: Hoffmann Eitle
(86) International application number: PCT/JP2016/061613
(87) International publication number: WO 2016/163542

(57) **Abstract**

A beam selection method, a mobile station and a base station are disclosed. A mobile station according to an aspect of the present invention, includes a receiving section configured to receive information for indicating a first quantity of reference signal resources and to receive beams corresponding to reference signals in the first quantity of reference signal resources, based on said information; and a selecting section configured to carry out channel estimation based on the received beams. The mobile station can reduce its workload and signaling overhead by carrying out channel estimation and feedback based on reference signals in the reference signal resources notified by a base station.

## Description

### Technical Field

The present invention relates to multi-antenna technology, and in particular, relates to multi-antenna technology in a beam selection method, a mobile station and a base station.

### Background Art

Traditionally, base stations have used a one-dimensional antenna to communicate with mobile stations. In recent years, three-dimensional beam forming technology has been proposed in order to further improve signal transmission quality between a base station and a mobile station, and to increase the throughput of radio communication systems.

In three-dimensional beamforming technology, a base station uses a two-dimensional antenna array to communicate with a mobile station. Compared to a one-dimensional antenna, a two-dimensional antenna array is not only set in the horizontal dimension and horizontal beam control performed, but also is set in the vertical dimension (altitude direction) and beam control is performed, thereby achieving three-dimensional beamforming. By using three-dimensional beamforming, a higher beamforming gain can be obtained, and a good signal transmission quality can be obtained with mobile stations in different locations (especially in different height-locations).

On the other hand, it is necessary to carry out channel estimation before the radio base station transmits downlink data to the mobile station. Specifically, the radio base station transmits a beam corresponding to a channel state information reference signal (CSI-RS) created by precoding in the mobile station, the mobile station carries out channel estimation based on the received beam, and the mobile station sends a channel estimation result as feedback to the radio base station in order to for the radio base station to transmit downlink data based on the channel estimation result.

However, in the current 3^{rd} Generation Partnership Project (3GPP) technical standards, there are limitations on the maximum values for the quantity of nonzero power CSI-RS resources that can be allocated (i.e., the CSI-RS resource allocation quantity) for mobile stations, and for the quantity of channel state information processes (CSI processes). For example, the maximum value for the nonzero CSI-RS resource allocation quantity that can be allocated for channel estimation for mobile stations is limited to "3", and the maximum value for the quantity of CSI processes for channel estimation for mobile stations is limited to "4", wherein each CSI process includes only one nonzero power CSI-RS resource.

### Summary of Invention

### Technical Problem

Due to the increasing of the quantity of two-dimensional antenna arrays, the maximum values of the quantities of non-zero power CSI-RS resources and processes defined in current 3GPP technical standards do not satisfy the demands of mobile stations performing beam selection.

### Solution to Problem

According to the present invention, a mobile station includes a receiving section configured to receive information for indicating a first quantity of reference signal resources and to receive beams corresponding to reference signals in the first quantity of reference signal resources, based on said information; and a selecting section configured to carry out channel estimation based on the received beams.

According to another aspect of the present invention, a beam selection method performed in a mobile station is provided, including a step of receiving information from a radio base station for indicating a first quantity of reference signal resources which can be allocated for the mobile station; a step of receiving beams corresponding to reference signals in the first quantity of reference signal resources, based on said information; and a step of selecting at least one beam out of the received beams.

According to another aspect of the present invention, a mobile station is provided, including a receiving section configured to receive information from a radio base station for indicating a first quantity of reference signal resources which can be allocated for the mobile station, and to receive beams corresponding to reference signals in the first quantity of reference signal resources, based on said information; and a selecting section configured to select at least one beam out of the received beams.

According to another aspect of the present invention, a radio base station is provided, including a selecting section configured to select at least one reference signal resource out of a plurality of reference signal resources that are allocated in advance; and a transmitting section configured to transmit information, from a radio base station for indicating the selected reference signal resource, to a mobile station so that the mobile station receives a beam corresponding to the at least one reference signal resource based on said information.

### Advantageous Effects of Invention

By using the beam selection method, the mobile station and the radio base station of above-mentioned aspects of the present invention, the reference signal resources (e.g., nonzero power CSI-RS resources), which can be allocated for the mobile station, can be increased. Furthermore, by selecting one or a plurality of reference signal resources out of a plurality of reference signal resources that are allocated in advance, so that the mobile station can carry out channel estimation and feedback based on the beam corresponding to the reference signal of the selected reference signal resources, the workload on the mobile station can be reduced.

### Brief Description of Drawings

Other objectives, features and advantages of the present invention will come apparent in the below-discussed embodiment of the present invention, combined with the drawings.
FIG. 1 is a schematic diagram showing a radio communication system, to which an embodiment of the present invention can be applied.
FIG. 2 is a flowchart showing a reference signal notification method pertaining to the illustrated embodiment of the present invention.
FIG. 3 is a flowchart showing a beam selection method pertaining to the illustrated embodiment of the present invention.
FIG. 4 is a block diagram showing a base station, pertaining to the illustrated embodiment of the present invention.
FIG. 5 is a block diagram showing a mobile station, pertaining to the illustrated embodiment of the present invention.

### Description of Embodiments

The following is a description of a beam selection method, a mobile station, and a base station pertaining to an embodiment of the present invention, with reference to the drawings. In the drawings, the same reference designators always designate the same elements. The below-described embodiment is for explanatory purposes only, and clearly should not be interpreted as limiting the scope of the present invention thereto.

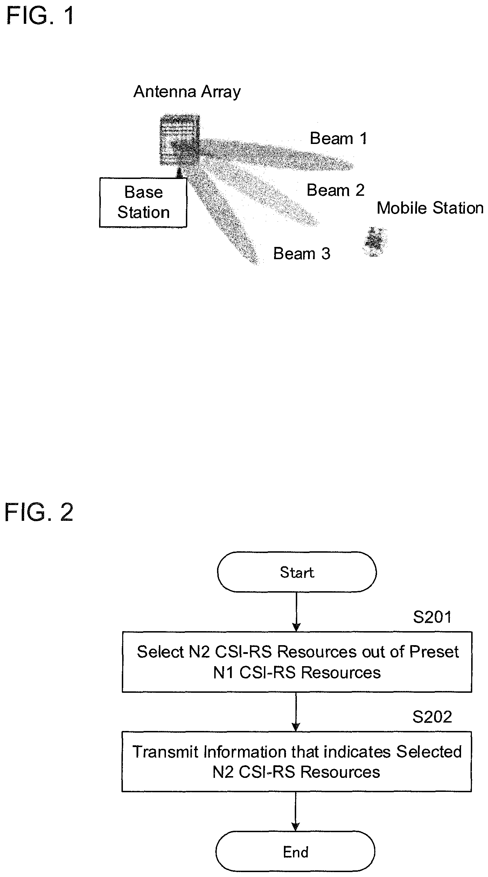

First of all, a schematic diagram of a radio communication system, to which the embodiment of the present invention can be applied, will be discussed with reference to FIG. 1.

As shown in FIG. 1, the radio communication system includes at least one base station and at least one mobile station. The base station can be connected to a higher layer apparatus (not shown in drawings), and the higher layer apparatus is connected to a core network (not shown in the drawings). The base station is provided with a two-dimensional antenna array and communicates with a mobile station via the antenna array. Before downlink data is transmitted to the mobile station, the base station carries out precoding using a corresponding precoding vector, to thereby create reference signal beams (e.g., the three beams in FIG. 1) having different directions, and these beams are transmitted to the mobile station by the antenna array of the antenna.

The mobile station receives these beams and performs a channel estimation, selects at least one beam based on the channel estimation result, and performs a feedback of the selected beam to the base station so that the base station transmits downlink data based on the feedback. It should be noted that although only one base station and only one mobile station are shown in FIG. 1, a larger number of base stations and mobile stations can be present. Furthermore, although only three reference signal beams are shown in FIG. 1, the number of beams can be increased or decreased as necessary. What should be recognized is that the above-described reference signals may be CSI-RSs, common reference signals (CRS) or demodulation reference signals (DMRS), or alternatively, make be undertaken by appropriate signals, such as primary synchronized signals (PSS) or secondary synchronized signals (SSS), etc. Hereinafter, for the sake of convenience, the embodiment of the present invention will be described using a CSI-RS as a reference signal, however, such descriptions can similarly apply to other types of reference signals.

In the embodiment of the present invention, more CSI-RS resources, which can be allocated for the mobile station, can be preset in the base station with respect to the number of nonzero power CSI-RS resources which can be allocated for the mobile station that are prescribed in current 3GPP technical standards. For example, 64 CSI-RS resources, which can be allocated for the mobile station, can be preset. For example, a larger number of CSI processes, which can be allocated for the mobile station, can be preset in the base station as needed. For example, 64 CSI processes, which can be allocated for the mobile station, can be preset.

For example, with respect to transmission mode 10, the above-described settings can be implemented by amending the value of the parameter "maxCSI-Proc-r11", for indicating a maximum number of CSI-RS processes which can be allocated for the mobile station per carrier frequency, from "4", as defined in the 3GPP technical standard TS 36.331 V12.5.0, to "64", and by adaptively amending content of other specification standards. By increasing the nonzero power CSI-RS resources and/or CSI processes, which can be allocated for the mobile station, the mobile station can receive a larger number of beams and a beam selection having a higher spatial resolution can be achieved.

It should be noted that the number "64" is being referred to for explanatory purposes, and the present invention is not limited thereto; a larger number or a smaller number of CSI-RS resources and/or CSI processes, which can be allocated for the mobile station, may be preset as necessary.

Incidentally, due to an increase in the preset CSI-RS resources or CSI processes, which can be allocated for the mobile station, when the number of preset CSI-RS resources or CSI processes is large, each mobile station receives beams corresponding to all of the reference signals in the CSI-RS resources or CSI processes, and if channel estimation is carried out based on these beams, each mobile station would need to perform a large amount of calculations, and would need to report channel state information for a large number of beams; thereby causing high complexity of calculations and a large work load.

Furthermore, when the number of preset CSI-RS resources or CSI processes is large, since the size of triggering signal (CSI request bits), for triggering a channel estimation that the base station transmits to the mobile station, may possibly increase, the signaling overhead may increase. On the other hand, the beams corresponding to all of the reference signals in the CSI-RS resources or CSI processes have different directions, so that some mobile stations in some locations would not need beams whose receiving direction deviates greatly form the mobile station's own location.

On the basis of the above recognition, in the embodiment of the present invention, the base station selects some of the CSI-RS resources from out of the preset CSI-RS resources and notifies the mobile stations thereof so that each mobile station can carry out an operation corresponding to the CSI-RS resources of which the mobile station has been notified. Furthermore, the base station selects, as necessary, some of the CSI processes from out of the preset CSI processes and notifies the mobile stations thereof so that each mobile station can carry out an operation corresponding to the CSI processes of which the mobile station has been notified.

Hereinbelow, details of a reference signal notification method pertaining to the embodiment of the present invention will be described with reference to FIG. 2. This method may be performed in the base station.

As shown in FIG. 2, in step S201, the base station selects, from out of a preset plurality of CSI-RS resources (herein referred to as "N1 CSI-RS resources" for convenience; N1 being a natural number greater than 1), at least one CSI-RS resource (herein referred to as "N2 CSI-RS resources" for convenience; N2 being a natural number) as the CSI-RS resources which can be allocated for the mobile station.

N2 can be flexibly designated, as necessary, as any arbitrary number that is less than N1. For example, if N1 is greater than 8, 8 or less CSI-RS resources are allocated to the mobile station with respect to each transmission time interval (TTI), in other words, N2 does not need to be greater than 8 in order for channel estimation to carried out without receiving all the beams corresponding to the CSI-RSs of more than 8 CSI-RS resources. The base station may use any of a plurality of methods to select N2 CSI-RS resources.

For example, the base station receives an uplink signal transmitted by the mobile station, identifies an approximate azimuth direction of the mobile station based on the uplink signal, and selects N2 CSI-RS resources, by which the direction of the beam produced by precoding is in the close proximity of the azimuth of the mobile station, from out of the preset N1 CSI-RS resources. Of course, the base station may use another method to select N2 CSI-RS resources or may select N2 CSI-RS resources from preset N1 CSI-RS resources.

In an implementation method, the N1 CSI-RS resources are divided into a plurality of groups with each group having one group index. For example, a mapping table is stored in advance in the base station and in the mobile station, and mapping relationships between a group index of each group and an index of the CSI-RS resource within each group are stored in each mapping table so that a related CSI-RS resource can be specified by designating a group index.

Accordingly, the base station selects a CSI-RS resource, and by specifying a group index that corresponds to the selected CSI-RS resource, the group index becomes information that indicates the selected N2 CSI-RS resources.

In another implementation method, the base station directly selects N2 CSI-RS resources from out of N1 CSI-RS resources. In this case, the information that indicates the selected N2 CSI-RS resources may be an index for the selected N2 CSI-RS resources.

Instead of a CSI-RS resource, the base station can select at least one CSI process (herein referred to as "N4 CSI processes" for convenience; N4 being a natural number) from out of a preset plurality of CSI processes (herein referred to as "N3 CSI processes" for convenience; N3 being a natural number greater than 1), to become a CSI process(es) that can be allocated for the mobile station. N4 can be flexibly designated, as necessary, to any arbitrary number that is less than N3. For example, if N3 is greater than 8, N4 may be less than 8. The base station uses one of the above-described plurality of methods to select N4 CSI processes; a detailed explanation of which is omitted herein.

Similarly, when a CSI process is selected, N3 CSI processes are divided into a plurality of groups with each group having one group index. For example, a mapping table is stored in the base station and in the mobile station, and mapping relationships between a group index of each group and an index of the CSI-RS process within each group are stored in each mapping table so that a related CSI-RS process can be specified by designating a group index.

Accordingly, the base station selects a CSI process, and by specifying a group index that corresponds to the selected CSI process, the group index becomes information that indicates the selected N4 CSI processes.

The base station may directly select N4 CSI processes from out of N3 CSI processes. In this case, the information that indicates the selected N4 CSI processes may be an index for the selected N4 CSI processes.

Subsequently, referring to FIG. 2, in step S202, the base station may transmit the information that indicates the selected N2 CSI-RS resources (e.g., the group index or the CSI-RS resource index) to the mobile station.

The base station transmits the information that indicates the selected N2 CSI-RS resources to the mobile station via, e.g., semi-static signaling. The semi-static signaling may, e.g., radio resource control (RRC) signaling.

The base station may use a new RRC signaling that is different to that of the current RRC signaling to notify the mobile station of the information that indicates the selected N2 CSI-RS resources. In such a case, the base station may include said information in the new RRC signaling.

Alternatively, the base station may amend the current RRC signaling and use the amended RRC signaling to notify the mobile station of the information that indicates the selected N2 CSI-RS resources. For example, the base station can amend an information element "CSI-Process" in the RRC signaling to change the information element from one that supports only one nonzero power CSI-RS resource (corresponding to one beam) to one that supports N2 CSI-RS resources (correspond to N2 beams) in order to include said information.

Alternatively, the base station can amend the information element "CSI-RS-Config" in the RRC signaling to change the information element from one that supports only one "csi-RS-r10" for one beam to one that supports N2 "csi-RS-r10"s for N2 beams in order to include said information.

Alternatively, the base station can amend the parameter "csi-RS-r10" in the information element "CSI-RS-Config" to change the information element from one that supports only one value for one beam to one that supports N2 values for N2 beams in order to include said information. Of course, the base station can amend two or a multiple number of items in the information element "CSI-Process", the information element "CSI-RS-Config" and/or the parameter "csi-RS-r10" to include the information that indicates the selected N2 CSI-RS resources.

In the case where the base station selects N4 CSI processes from out of N3 CSI processes, the base station may transmit the information that indicates the selected N4 CSI processes to the mobile station. In such a case, the base station transmits the information that indicates the selected N4 CSI processes by a similar method to that of the CSI-RS resource. For example, the base station transmits said information by semi-static signaling. The semi-static signaling may, e.g., radio resource control (RRC) signaling.

The base station may use a new RRC signaling that is different to that of the current RRC signaling, or may amend the current signaling to notify the mobile station of the information that indicates the selected N4 CSI processes.

Furthermore, the base station may use the same or different RRC signaling as the RRC signaling that transmits the information that indicates the selected N2 CSI-RS resources to transmit the information that indicates the selected N4 CSI processes.

In addition to transmitting information that indicates the selected CSI-RS resource(s) and/or CSI process(es), the base station may also generate a beam corresponding to the CSI-RS or CSI process in each CSI-RS resource, which can be allocated for the mobile station within a cell, by performing precoding using a corresponding precoding vector. Each beam has a corresponding beam index. Thereafter, the base station may transmit these beams to the mobile station within the cell via a two-dimensional antenna array.

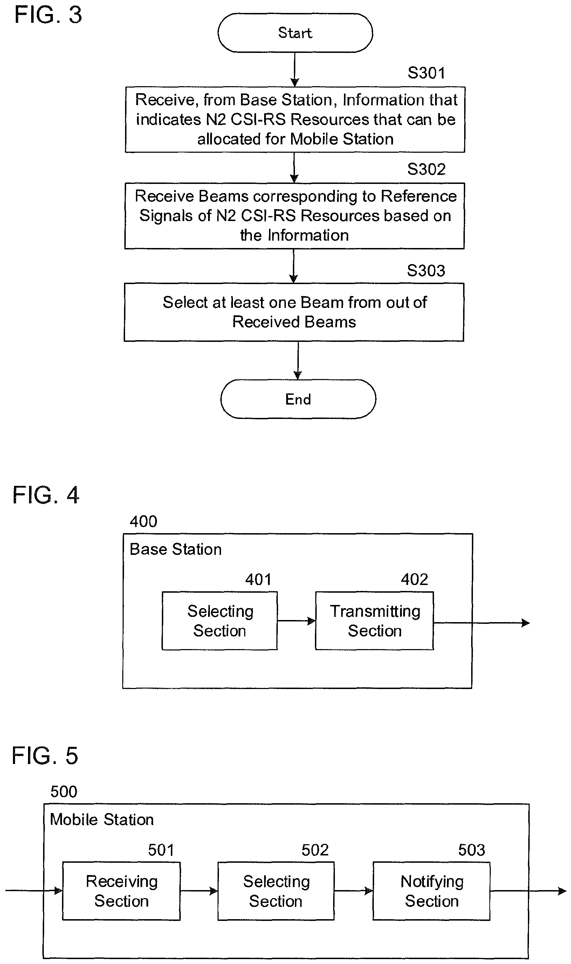

Hereinbelow, details of a beam selection method pertaining to the embodiment of the present invention will be described with reference to FIG. 3.

As shown in FIG. 3, in step S301, the mobile station receives information that indicates N2 CSI-RS resources, which can be allocated for the mobile station, from the base station.

As described above, the base station selects N2 CSI-RS resources from out of the preset N1 CSI-RS resources to be the N2 CSI-RS resources which can be allocated for the mobile station. Thereafter, the information that indicates the selected N2 CSI-RS resources is transmitted to the mobile station.

In the case where the base station transmits the information that indicates the selected N2 CSI-RS resources via RRC signaling, the mobile station can receive said information by receiving the RRC signaling.

Furthermore, in the case where the base station divides the N1 CSI-RS resources into a plurality of groups, the N2 CSI-RS resources belongs to at least one group out of the plurality of groups, and the information that indicates the selected N2 CSI-RS resources is a group index of the at least one group.

Whereas, in the case where the base station directly selects N2 CSI-RS resources, which can be allocated for the mobile station, from out of the N1 CSI-RS resources, the information that indicates the selected N2 CSI-RS resources may be an index for the selected N2 CSI-RS resources.

In step S302, the mobile station receives beams corresponding to the reference signals of the N2 CSI-RS resources based on information that indicates the selected N2 CSI-RS resources received from the base station. Specifically, after the mobile station receives the information that indicates the N2 CSI-RS resources transmitted by the base station, the mobile station receives the beams corresponding to the reference signals of the N2 CSI-RS resources, which said information indicates, transmitted by the base station. The specific method that the mobile station uses to receive the beam is already known in this field; hence, a detailed description thereof is herein omitted.

Alternatively, in the case where the base station selects N4 CSI processes out of preset N3 CSI processes, and transmits information that indicates the selected N4 CSI processes to the mobile station, in step S301, the mobile station may receive the information that indicates the selected N4 CSI processes. Correspondingly, in step S302, beams corresponding to the selected N4 CSI processes (i.e., beams corresponding to the reference signals in the N2 CSI-RS resources) may be received.

In step S303, the mobile station selects at least one beam out of the received beams. The number of beams to select may be decided by the mobile station, or may be set in the base station. Furthermore, the mobile station or the base station specifies the number of beams that are selected by a plurality of methods. For example, the number of selected beams can be specified in accordance with the number of streams that the base station transmits to the mobile station. For example, one beam may be selected if the number of transmitted streams is 1, and two beams may be selected if the number of transmitted streams is 2.

In the illustrated embodiment of the present invention, the mobile station may select at least one beam out of the received beams in accordance with conditions in regard to channel quality, data throughput or reception power of the received beam. Specifically, the mobile station can identify the channel quality of the channel corresponding to each respective beam by carrying out a channel estimation based on each respective received beam. The channel quality can be indicated by, e.g., a channel quality indicator (CQI), etc. Furthermore, the mobile station specifies a rank indicator (RI) and a precoding matrix indicator (PMI), etc., corresponding to each beam. The mobile station carries out channel estimation based on each beam, in which the method for specifying the CQI, RI and/or PMI is known in the art; hence, a detailed description thereof is herein omitted for the sake of simplicity.

In the case where the above-mentioned at least one beam is selected based on conditions related to channel quality, corresponding to the received beams, the mobile station selects one or a plurality of beams that have good channel quality from out of the received beams. For example, the mobile station may select at least one beam in order of channel quality.

In the case where beams are selected based on conditions relating to data throughput, corresponding to the received beams, the mobile station estimates, using a CQI corresponding to each specified beam, an anticipated data throughput that can be obtained when data is transmitted using a precoding vector corresponding to the beam. Thereafter, one or a plurality of beams that have a large anticipated throughput are selected out of the received beams. For example, the mobile station selects at least one beam in order of large anticipated throughput.

In the case where beams are selected based on conditions relating to reception power, corresponding to the received beams, the mobile station selects one or a plurality of beams that have a large reception power out of the received beams. For example, the mobile station selects at least one beam in order of large reception power. It should be noted that the mobile station may select the at least one beam based on other conditions.

After a beam is selected, the mobile station may provide feedback, to the base station, information that indicates the selected beam. This information may be a beam index (BI) for the selected beam.

In the illustrated embodiment of the present invention, the mobile station selects a suitable method to provide feedback on the beam index, as necessary. The base station can configure a specific feedback method.

For example, the mobile station can periodically or aperiodically feedback the beam index. Furthermore, the mobile station feeds back the beam index for a long time interval and/or in regard to a wide frequency band. The mobile station feeds back the beam index at the same timing or frequency as that of the RI. The mobile station feeds back the beam index at the same timing or frequency as that of the first layer codebook W1 in the 2D codebook W defined in 3GPP Rel. 10 and Rel. 12.

In the case where the mobile station is configured to aperiodically provide feedback, the mobile station feeds back a beam index together with at least one of an RI, PMI and CQI. In the case where the mobile station is configured to periodically provide feedback, the feedback period of the beam index is the same or different from the feedback period of the RI, PMI and/or CQI.

After the base station receives the beam index fed back from the mobile station, the base station identifies the CSI-RS or CSI process corresponding to the beam index, and also identifies a data precoding vector that is suitable for transmitting to the mobile station. Thereafter, the base station uses the precoding vector to precode the data to be transmitted to the mobile station and transmits the precoded data.

As can be understood from the above, in the illustrated embodiment of the present invention, by increasing the number of CSI-RS resources and/or CSI processes, which can be allocated for the mobile station, the spatial resolution of the channel estimation can be improved.

Furthermore, due to the base station selecting a CSI-RS resource and/or a CSI process that is relatively suited to the mobile station out of a preset plurality of CSI-RS resources and/or CSI processes for the mobile station in order to perform channel encoding and feedback based only on the beam that corresponds to the reference signal and/or CSI process in the CSI-RS resource selected by the mobile station, and due to the base station notifying the mobile station, an increase the number of CSI request bits that the base station transmits to the mobile station can be avoided while the workload of the mobile station for carrying out channel estimation and feedback can be reduced.

Hereinbelow, the base station according to the illustrated embodiment of the present invention will be described with reference to FIG. 4.

FIG. 4 is a block diagram of the base station according to the illustrated embodiment of the present invention. As shown in FIG. 4, a base station 400 includes a selecting section 401 and a transmitting section 402. Although the base station 400 may include other sections other than these two sections, such as, e.g., sections that perform various processes on data signals or control signals, since these sections are not related to the content of the illustrated embodiment of the present invention, such sections are omitted from the drawings and descriptions. Furthermore, since the specific details of the below-described operations performed by the base station 400, according to the illustrated embodiment of the present invention, are the same as the above-described details referenced to FIG. 2, a duplicate description of the same details has been omitted to avoid repetition.

The selecting section 401 selects N2 CSI-RS resources out of preset N1 CSI-RS resources as a CSI-RS resource(s) that can be allocated for the mobile station. N2 can be flexibly designated, as necessary, to any arbitrary number that is less than N1. The selecting section 401 selects the N2 CSI-RS resources using any of the above-described plurality of methods.

In an implementation method, the N1 CSI-RS resources are divided into a plurality of groups with each group having one group index. For example, a mapping table is stored in advance in the base station and in the mobile station, and mapping relationships between a group index of each group and an index of the CSI-RS resource within each group are stored in each mapping table so that a related CSI-RS resource can be specified by designating a group index. Accordingly, the selecting section 401 selects a CSI-RS resource and identifies a group index that corresponds to an index of the selected CSI-RS resource, whereby the group index is designated as information that indicates the N2 CSI-RS resources.

In another implementation method, the selecting section 401 directly selects N1 CSI-RS resources from out of N2 CSI-RS resources. In such a case, the information that indicates the selected N2 CSI-RS resources may be indices of the selected N2 CSI-RS resources.

Alternatively, the selecting section 401 can select N4 CSI processes from out of preset N3 CSI processes to be the CSI process(es) which can be allocated for the mobile station. N4 can be flexibly designated, as necessary, to any arbitrary number that is less than N3. The selecting section 401 may select N4 CSI processes using any of the plurality of the above-described method; an explanation of which is omitted here.

Similarly, when a CSI process is selected, N3 CSI processes are divided into a plurality of groups with each group having one group index. For example, a mapping table is stored in the base station and in the mobile station, and mapping relationships between a group index of each group and an index of the CSI-RS process within each group are stored in each mapping table so that a related CSI-RS process can be specified by designating a group index. In this manner, by the selecting section 401 selecting a CSI process and designating a group index that corresponds to the index of the selected CSI process, the group index becomes the information that indicates the selected N4 CSI processes.

The selecting section 401 may directly select N4 CSI processes out of N3 CSI processes. In this case, the information that indicates the selected N4 CSI processes may be an index for the selected N4 CSI processes.

The transmitting section 402 transmits the information that indicates the selected N2 CSI-RS resources (e.g., the selected index, or the indices of the CSI-RS resource(s)) to the mobile station.

As described above, the transmitting section 402 transmits information indicating the selected N2 CSI-RS resources to the mobile station by, e.g., semi-static signaling. The semi-static signaling may be, e.g., RRC signaling.

The transmitting section 402 may use a new RRC signaling that is different to that of the current RRC signaling to notify the mobile station of the information that indicates the selected N2 CSI-RS resources. In such a case, the transmitting section 402 may include said information in the new RRC signaling. Alternatively, the transmitting section 402 may amend the current RRC signaling and use the amended RRC signaling to notify the mobile station of the information that indicates the selected N2 CSI-RS resources. For example, the current RRC signaling may be amended in accordance with the above-described method and transmitted to the mobile station.

In the case where the selecting section 401 selects N4 CSI processes from out of the N3 CSI processes, the transmitting section 402 may transmit the information that indicates the selected N4 CSI processes to the mobile station. In such a case, the transmitting section 402 may transmit the information that indicates the selected N4 CSI processes in accordance with the above-described method; an explanation of which is omitted here.

In addition to transmitting the information that indicates the selected CSI-RS resource(s) and/or CSI process(es), the transmitting section 402 may also generate a beam corresponding to the CSI-RS or CSI process in each CSI-RS resource, which can be allocated for the mobile station within a cell, by performing precoding using a corresponding precoding vector. Each beam has a corresponding beam index. Thereafter, the transmitting section 402 may transmit these beams to the mobile station within the cell via a two-dimensional antenna array.

Hereinbelow, a description of the mobile station pertaining to the illustrated embodiment of the present invention will be described with reference to FIG. 5.

FIG. 5 shows a block diagram of the mobile station pertaining to the illustrated embodiment of the present invention. As shown in FIG. 5, a mobile station 500 pertaining to the illustrated embodiment of the present invention includes a receiving section 501, a selecting section 502 and a notifying section 503. Although the mobile station 500 may include sections other than these three sections, such as, e.g., sections that perform various processes on received data signals or control signals, since these sections are not related to the content of the illustrated embodiment of the present invention, such sections are omitted from the drawings and descriptions. Furthermore, since the specific details of the below-described operations performed by the mobile station 500, according to the illustrated embodiment of the present invention, are the same as the above-described details referenced to FIG. 3, a duplicate description of the same details has been omitted to avoid repetition.

The receiving section 501 may receive information that indicates N2 CSI-RS resources, which can be allocated for the mobile station, from the base station.

As described above, the base station selects the N2 CSI-RS resources from out of the preset N1 CSI-RS resources to be the N2 CSI-RS resources, which can be allocated for the mobile station. Thereafter, the information that indicates the selected N2 CSI-RS resources is transmitted to the mobile station.

In the case where the base station transmits the information that indicates the selected N2 CSI-RS resources via RRC signaling, the receiving section 501 can receive said information by receiving the RRC signaling. Furthermore, in the case where the base station divides the N1 CSI-RS resources into a plurality of groups, the N2 CSI-RS resources belongs to at least one group out of the plurality of groups, and the information that indicates the selected N2 CSI-RS resources is a group index of the at least one group.

Whereas, in the case where the base station directly selects N2 CSI-RS resources, which can be allocated for the mobile station, from out of the N1 CSI-RS resources, the information that indicates the selected N2 CSI-RS resources may be an index for the selected N2 CSI-RS resources.

The receiving section 501, after receiving information that indicates the selected CSI-RS resource(s), receives beams corresponding to the reference signals of the N2 CSI-RS resources based on said information. Furthermore, in the case where the base station transmits the information that indicates the selected N4 CSI processes to mobile station, the receiving section 501 also receives the information that indicates the selected N4 CSI processes. Correspondingly, the receiving section 501 receives beams corresponding to the selected N4 CSI processes (i.e., beams corresponding to the reference signals in the N2 CSI-RS resources).

The selecting section 502 selects at least one beam out of the beams received by the receiving section 501. As described above, the number of selected beams may be decided by the mobile station itself, or set by the base station. Furthermore, the mobile station or the base station identifies the number of selected beams by any of a plurality of methods (e.g., the number of streams that the base station transmits to the mobile station).

Furthermore, the selecting section 502 selects at least one beam from out of the received beams in accordance with conditions in regard to channel quality, data throughput or reception power of the received beam via the selecting section 502 itself or a channel estimation section (not shown in the drawings).

Specifically, the selecting section 502 can identify the channel quality of the channel corresponding to each respective beam by carrying out a channel estimation based on each respective received beam via the selecting section 502 itself or a channel estimation section (not shown in the drawings). The channel quality can be indicated by, e.g., a CQI, etc. Furthermore, the selecting section 502 specifies a rank indicator (RI) and a precoding matrix indicator (PMI), etc., corresponding to each beam via the selecting section 502 itself or a channel estimation section (not shown in the drawings).

In the case where the above-mentioned at least one beam is selected based on conditions related to channel quality, corresponding to the received beams, the selecting section 502 selects one or a plurality of beams that have good channel quality from out of the received beams.

In the case where beams are selected based on conditions relating to data throughput, corresponding to the received beams, the selecting section 502 estimates, using a CQI corresponding to each specified beam, an anticipated data throughput that can be obtained when data is transmitted using a precoding vector corresponding to the beam. Thereafter, one or a plurality of beams that have a large anticipated throughput are selected out of the received beams.

In the case where beams are selected based on conditions relating to reception power, corresponding to the received beams, the selecting section 502 selects one or a plurality of beams that have a large reception power out of the received beams. The selecting section 502 may select the at least one beam based on condition other than those discussed above.

The notifying section 503 notifies (or feeds back) information that indicates the beam that has been selected by the selecting section 502 to the base station. This information may be a beam index (BI) for the selected beam. As described above, the notifying section 503 selects a suitable method to provide feedback on the beam index, as necessary, and the base station can configure a specific feedback method. For example, the notifying section 503 can periodically or aperiodically feedback the beam index.

Furthermore, the notifying section 503 feeds back the beam index for a long time interval and/or in regard to a wide frequency band. The notifying section 503 feeds back the beam index at the same timing or frequency as that of the RI. The notifying section 503 feeds back the beam index at the same timing or frequency as that of the first layer codebook W1 in the 2D codebook W defined in 3GPP Rel. 10 and Rel. 12.

In the case where the mobile station is configured to aperiodically provide feedback, the notifying section 503 feeds back a beam index together with at least one of an RI, PMI and CQI. In the case where the mobile station is configured to periodically provide feedback, the feedback period of the beam index is the same or different from the feedback period of the RI, PMI and/or CQI.

After the base station receives the beam index fed back from the notifying section 503, the base station identifies the CSI-RS corresponding to the beam index, and also identifies a data precoding vector that is suitable for transmitting to the mobile station. Thereafter, the base station uses the precoding vector to precode the data to be transmitted to the mobile station and transmits the precoded data.

As can be understood from the above, in the illustrated embodiment of the present invention, although a multiple number of CSI-RS resources and/or CSI processes are allocated in advance for each mobile station, the workload of the mobile station can be reduced by the mobile station receiving, from the base station, information that indicates the selected CSI-RS resources and/or CSI processes, and by the mobile station carrying out channel estimation and feedback upon receiving beams corresponding to the CSI-RS resources and/or CSI processes that are suitable for the mobile station.

The above discloses each example of the present invention based on a two-dimensional antenna array. Incidentally, it should be noted that the above descriptions are merely illustrative, and are not expositive. The illustrated embodiments of the present invention can also be applied to other types of antennae other than a two-dimensional antenna; for example, a one-dimension antenna (e.g., an antenna provided with a plurality of antenna boards arranged in the vertical dimension) and a three-dimensional antenna (e.g., a cylindrical antenna or a cube antenna), etc. Furthermore, each embodiment of the present invention has been described based on CSI processes, however, it should be noted that the CSI processes being reference signal processes is merely one example; the embodiments of the present invention can be applied to other types of reference signal processes.

Although the present invention has be described with specific embodiments, it is understood that changes can be made in the various forms and details of the specific embodiments, such modifications being, to one skilled in the art, within the spirit and scope of the present invention of the claims or equivalents thereof.

The disclosure of Chinese Patent Application No. 201510166095.9, filed on April 9, 2015, is incorporated herein by reference in its entirety.

## Claims

1. A mobile station comprising:
a receiving section configured to receive information for indicating a first quantity of reference signal resources and to receive beams corresponding to reference signals in the first quantity of reference signal resources, based on said information; and
a selecting section configured to carry out channel estimation based on the received beams.

2. The mobile station according to claim 1, wherein said information is indices of the first quantity of reference signal resources.

3. The mobile station according to claim 1 or claim 2, wherein the selecting section selects at least one beam out of the received beams, and
wherein the mobile station includes a notifying section configured to notify information that indicates the selected at least one beam.

4. The mobile station according to claim 3, wherein the notifying section reports the information that indicates the selected at least one beam together with at least one out of a rank indicator (RI), a precoding matrix indicator (PMI), and a channel quality indicator (CQI).

5. The mobile station according to any one of claims 1 through 4, wherein the receiving section receives reference signals of 64 reference signal resources.

6. A mobile station comprising:
a selecting section configured to select a first quantity of reference signal resources from out of a plurality of reference signal resources;
a transmitting section configured to transmit, to the mobile station, information that indicates the first quantity of reference signal resources so that the mobile station receives beams corresponding to reference signals of the first quantity of reference signal resources based on said information.

7. A method comprising:
a step of receiving information that indicates a first quantity of reference signal references;
a step of receiving beams corresponding to reference signals in the first quantity of reference signal resources, based on said information; and
a step of carrying out channel estimation based on the received beams.
